(19) Europäisches Patentamt
European Patent Office
Office européen des brevets

(11) **EP 2 033 295 B1**

(12) **FASCICULE DE BREVET EUROPEEN**

(45) Date de publication et mention
de la délivrance du brevet:
**03.03.2010 Bulletin 2010/09**

(51) Int Cl.:
*H02J 15/00* (2006.01)   *H02M 3/07* (2006.01)
*H02M 3/137* (2006.01)   *H02M 3/158* (2006.01)
*H02M 7/758* (2006.01)   *H02M 7/797* (2006.01)

(21) Numéro de dépôt: **07720181.2**

(22) Date de dépôt: **07.06.2007**

(86) Numéro de dépôt international:
**PCT/CH2007/000284**

(87) Numéro de publication internationale:
**WO 2007/143868 (21.12.2007 Gazette 2007/51)**

(54) **DISPOSITIF D'ALIMENTATION D'UNE CHARGE COMPRENANT UN STOCKAGE D'ENERGIE INTEGRE**

EINRICHTUNG ZUM EINSPEISEN EINER LADUNG, EINSCHLIESSLICH INTEGRIERTER ENERGIESPEICHERUNG

DEVICE FOR FEEDING A CHARGE INCLUDING INTEGRATED ENERGY STORAGE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **16.06.2006 EP 06012385**

(43) Date de publication de la demande:
**11.03.2009 Bulletin 2009/11**

(73) Titulaires:
• **Ecole Polytechnique Fédérale de Lausanne (EPFL)**
**1015 Lausanne (CH)**
• **European Organization for Nuclear Research**
**1217 Meyrin (CH)**

(72) Inventeurs:
• **BORDRY, Frederick**
**1217 Meyrin (CH)**
• **BURNET, Jean-Paul**
**01170 Chevry (FR)**
• **FAHRNI, Claude**
**2800 Delémont (CH)**
• **RUFER, Alfred**
**1138 Villars-s-Yens (CH)**

(74) Mandataire: **Liesegang, Eva**
**Forrester & Boehmert**
**Pettenkoferstrasse 20-22**
**80336 München (DE)**

(56) Documents cités:
WO-A-03/038980      US-A- 5 638 263
US-A- 5 694 307     US-A1- 2003 214 824
US-A1- 2005 157 525

• **ALFRED RUFER ET AL: "A Supercapacitor-Based Energy-Storage System for Elevators With Soft Commutated Interface" IEEE TRANSACTIONS ON INDUSTRY APPLICATIONS, IEEE SERVICE CENTER, PISCATAWAY, NJ, US, vol. 38, no. 5, septembre 2002 (2002-09), XP011073540 ISSN: 0093-9994 cité dans la demande**
• **RUFER A ET AL: "A supercapacitor-based energy storage system for elevators with soft commutated interface" CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001, CONFERENCE RECORD OF THE IEEE INDUSTRY APPLICATIONS CONFERENCE. IAS ANNUAL MEETING, NEW YORK, NY : IEEE, US, vol. VOL. 1 OF 4. CONF. 36, 30 septembre 2001 (2001-09-30), pages 1413-1418, XP010561878 ISBN: 0-7803-7114-3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- NOWAK M ET AL: "Converters with AC transformer intermediate link suitable as interfaces for supercapacitor energy storage" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20 juin 2004 (2004-06-20), pages 4067-4073Vol5, XP010738362 ISBN: 0-7803-8399-0

- BARRADE, PITTET, RUFER: "Energy Storage System using a series connection of supercapacitors, with an active device for equalising the voltages" INTERNATIONAL POWER ELECTRONICS CONFERENCE, 2000, XP002410954 Tokyo, Japan

**Description**

La présente invention concerne un dispositif d'alimentation électrique d'une charge, ledit dispositif d'alimentation comprenant un stockage d'énergie électrique intégré.

Certains consommateurs d'énergie électrique nécessitent d'une part la fourniture d'une puissance électrique déterminée, accompagnée d'autre part de la fourniture d'une forte énergie durant une durée relativement faible du cycle. De tels cycles peuvent être répétés. Des consommateurs de ce type sont par exemple les électro-aimants des accélérateurs de particules, les moteurs d'entraînement de laminoirs, les ascenseurs et monte-charges, les grues, etc.... Un couplage direct d'un tel consommateur au réseau électrique peut amener de graves perturbations dudit réseau. Des moyens disposés entre le réseau électrique et le consommateur sont donc généralement chargés de stocker de l'énergie afin de la délivrer au moment voulu, de manière à ce que ces pointes de consommation ne soient pas directement fournies par le réseau.

Par ailleurs, les dispositifs d'alimentation habituels en énergie sont généralement munis de dissipateurs d'énergie résistifs chargés de dissiper l'énergie lorsque le flux de puissance est inversé, ce qui évidemment gaspille beaucoup d'énergie.

Comme moyens de stockage d'énergie, on trouve des systèmes d'accumulation d'énergie mécanique, par exemple l'énergie cinétique d'un volant en rotation, ou d'énergie électrostatique, par exemple dans des condensateurs ou des supercondensateurs, ou d'énergie magnétique, par exemple dans des selfs, ou d'énergie électrochimique, par exemple dans des batteries d'accumulateurs.

En particulier, l'article « A Supercapacitor-Based Energy-Storage System for Elevators With Soft Commutated Interface » par A. Rufer, publié dans « IEEE Transactions on Industry Applications, Vol 38, No 5, September/October 2002 » décrit une application d'un ascenseur ou d'un monte-charge dans lequel l'énergie est utilisée à travers l'association d'un convertisseur statique et d'une machine électrique d'entraînement. Dans ce cas, le convertisseur statique permet la variation continue et bidirectionnelle du flux de puissance à partir d'un circuit intermédiaire à tension continue, lui-même alimenté par un circuit redresseur placé entre ce circuit continu et le réseau primaire alternatif. Pour assister en puissance instantanée un tel système, l'article décrit une configuration comprenant en plus des parties d'entraînement, de convertisseur statique et de redresseur, un élément de stockage, ici un banc de supercondensateurs relié à un circuit intermédiaire à tension continue à l'aide d'un convertisseur statique supplémentaire.

Le brevet US-5.638.263 décrit un dispositif assez semblable dans lequel chaque convertisseur DC/DC est alimenté par son propre redresseur de tension, ce qui conduit à un système nettement plus onéreux et nettement moins fiable.

Un but de l'invention est donc de proposer un dispositif d'alimentation électrique dans lequel un élément de stockage d'énergie est placé directement au niveau du ou des circuits intermédiaires à tension continue, sans nécessiter l'utilisation d'un convertisseur statique supplémentaire. Ceci permet premièrement d'éviter des allers et retours de flux de puissance dans un convertisseur supplémentaire, améliorant ainsi le rendement énergétique du dispositif d'alimentation, ce qui permet de limiter les coûts d'exploitation.

Un autre but de l'invention est de proposer un dispositif de convertisseur statique bidirectionnel apte à alimenter un consommateur réclamant des besoins en puissance intermittente de niveau élevé et pour lesquels l'énergie nécessaire est prélevée directement du ou des circuits intermédiaires à tension continue.

La décharge en énergie du ou des circuits intermédiaires à tension continue, circuits constitués principalement d'une association série/parallèle de condensateurs, provoque une variation du niveau de tension continue. Cette variation correspond à une diminution de tension lors du prélèvement d'énergie et à une augmentation de tension lors de la restitution d'énergie. Pour alimenter l'utilisateur, par exemple la machine d'entraînement, dans des conditions acceptables, il est nécessaire de dimensionner correctement les condensateurs du ou des circuits intermédiaires à tension continue et de corriger éventuellement la fluctuation du niveau de tension du circuit à tension continue par une modification du taux de modulation imposé au convertisseur statique disposé entre le circuit à tension continue et l'utilisateur.

Particulièrement dans le contexte où l'invention est appliquée à l'alimentation du synchrotron à protons du CERN à Genève, on désire alimenter l'utilisateur, soit les bobines des aimants, à un niveau de tension élevée, de l'ordre d'une dizaine de kV. Pour ceci, l'un des buts de l'invention est de proposer un dispositif d'alimentation comprenant plusieurs convertisseurs statiques montés en série et comprenant chacun un circuit intermédiaire capacitif utilisé comme élément de stockage. Dans un tel cas seuls quelques uns de ces convertisseurs sont alimentés à partir du réseau primaire. Les autres convertisseurs/stockeurs possèdent également un circuit intermédiaire capacitif à tension continue dont la décharge et la recharge sont liées à l'alimentation et à la récupération d'énergie des bobines des aimants.

Dans une telle application, la circulation du courant dans les convertisseurs, les bobines des aimants et autres composants provoque des pertes énergétiques amenant à une décharge lente des circuits capacitifs lors de la succession des cycles d'alimentation. Afin de compenser ces décharges, un autre but de l'invention est de proposer un dispositif de commande et de réglage du fonctionnement de l'ensemble des convertisseurs permettant de transférer de l'énergie d'un convertisseur à l'autre lors de la circulation du courant délivré, permettant de maintenir les valeurs moyennes des tensions des circuits intermédiaires à tension continue par transfert énergétique d'un convertisseur à un autre, en particulier d'un convertisseur alimenté à un convertisseur non alimenté.

Afin d'atteindre ces buts, il est proposé un dispositif d'alimentation d'une charge, possédant les caractéristiques mentionnes dans la revendication 1, des variantes de formes d'exécution étant décrites dans les revendications dépendantes.

La description qui suit concerne une forme d'exécution de l'invention appliquée à la réalisation d'une alimentation du synchrotron à proton du CERN à Genève. Cette description n'est donnée ici qu'à titre d'exemple de réalisation de l'invention, bien d'autres applications étant également possibles. Des valeurs numériques sont indiquées uniquement à titre d'exemple se rapportant à ce consommateur d'énergie particulier. La description ci-dessous est à considérer en regard du dessin annexé comportant les figures où :

la figure 1 représente un schéma équivalent d'un aimant de l'accélérateur,

la figure 2 représente un diagramme du courant fourni à l'aimant de la figure précédente, respectivement au consommateur,

la figure 3 représente un diagramme de la tension moyenne appliquée aux bornes du consommateur,

la figure 4 représente un diagramme de la puissance instantanée demandée par le consommateur,

la figure 5 représente un diagramme de l'énergie fournie au consommateur,

la figure 6 représente une forme d'exécution du dispositif d'alimentation des consommateurs,

la figure 7 représente une première forme d'exécution d'une cellule de convertisseur DC/DC,

la figure 8 représente une autre forme d'exécution d'une cellule de convertisseur DC/DC,

la figure 9 représente encore une autre forme d'exécution d'une cellule de convertisseur DC/DC,

la figure 10 montre une forme d'exécution d'un modulateur de commande commandant une cellule DC/DC non directement alimentée par le réseau,

la figure 11 montre une forme d'exécution d'un modulateur de commande commandant une cellule DC/DC directement alimentée par le réseau,

la figure 12 est un diagramme montrant schématiquement les tensions aux bornes de trois convertisseurs DC/DC en série ainsi que la tension résultante,

la figure 13 montre l'allure de la décroissance de la tension aux bornes d'un convertisseur DC/DC, avec une variation du rapport cyclique,

la figure 14 montre un premier exemple de forme d'exécution d'une cellule de redresseurs utilisant un montage en pont triphasé de diodes,

la figure 15 montre un deuxième exemple de forme d'exécution d'une cellule de redresseurs utilisant un montage en pont triphasé de thyristors, et

la figure 16 montre un troisième exemple de forme d'exécution d'une cellule de redresseurs utilisant un onduleur à pulsation,

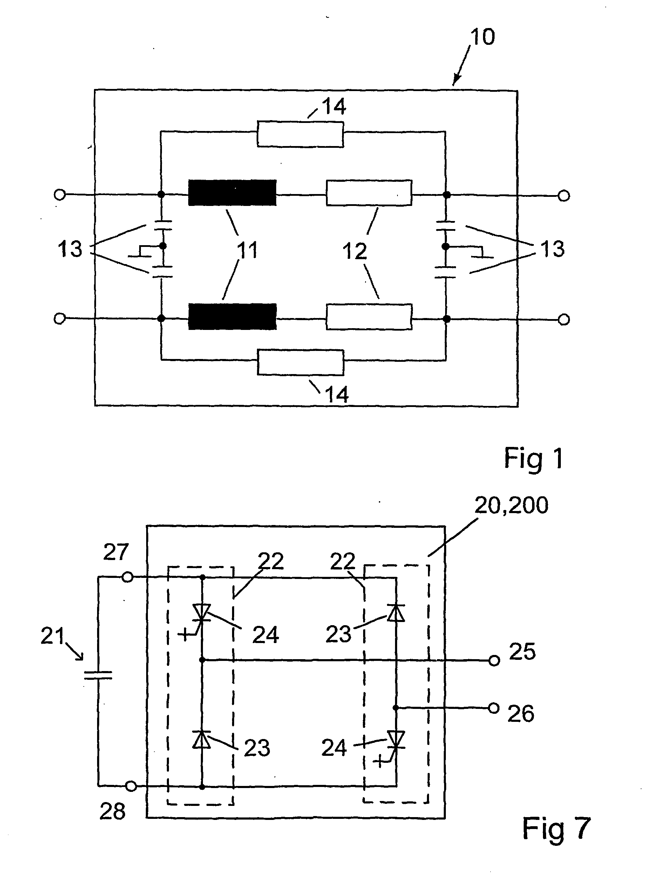

Sur la figure 1 on a représenté le schéma équivalent d'un aimant 10 d'une bobine de guidage du synchrotron à proton considéré, ladite bobine étant séparée en deux demi-bobines. L'inductance 11 de cette bobine vaut : L = 9 mH, sa résistance interne 12 vaut. R = 3.2 mΩ, sa capacité 13 par rapport au noyau magnétique vaut : C = 22 nF et sa résistance d'amortissement 14 vaut : ρ = 136 Ω. L'ensemble du synchrotron à proton comprend 101 bobinages tels que celui de la figure 1 montés en série.

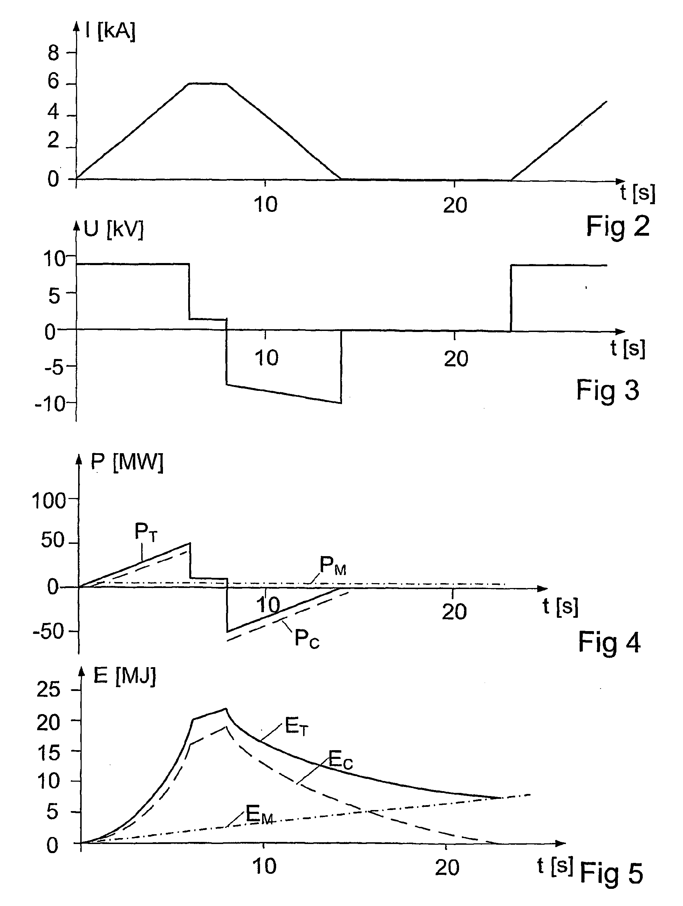

La figure 2 montre schématiquement un exemple de forme d'une impulsion de courant appliquée généralement au consommateur ci-dessus; l'impulsion comprend tout d'abord une montée régulière durant environ 0.65 s, suivie d'un palier à environ 6 kA durant environ 0.2 s et d'une descente régulière, ramenant le courant à zéro, durant aussi environ 0.65 s. L'impulsion est répétée toutes les 2.4 s environ.

La forme de l'impulsion de tension appliquée aux bornes de l'ensemble des bobines du synchrotron permettant d'appliquer l'impulsion de courant mentionnée est représentée à la figure 3; partant de zéro, la tension monte brusquement à environ 9 kV pour rester stable durant toute la durée de montée en courant des bobines ; cette tension présente un deuxième palier à environ 2 kV durant le palier de courant suivi d'une séquence à tension négative allant de environ - 7.5 kV à environ - 10 kV durant la descente de courant, la tension revenant à zéro pour la fin du cycle.

Des deux diagrammes précédents, on peut tirer le diagramme représenté à la figure 4 montrant la puissance instantanée $P_T$ qu'il est nécessaire de fournir au consommateur. On constate que celle-ci varie entre environ + 50 MW et - 50 MW ; de telles variations de puissance ne peuvent être acceptées par le réseau électrique. La puissance moyenne $P_M$ fournie durant le cycle est nettement plus faible, puisque de l'ordre de 5 MW ; cette courbe représente essentiellement la puissance fournie par le réseau électrique afin de compenser les pertes du système comme on le verra plus loin. La différence entre ces deux courbes, représente la puissance instantanée $P_C$, qui doit être fournie par le dispositif de stockage.

La figure 5 montre l'allure des courbes représentant l'énergie fournie à la charge, ces courbes étant obtenues par intégration en fonction du temps des trois courbes de la figure précédente. On a donc une première courbe $E_T$ représentant l'énergie totale fournie à la charge, une deuxième courbe $E_M$ représentant l'énergie fournie par le réseau, alors que la troisième courbe $E_C$ représente l'énergie fournie par le dispositif de stockage. On constate que celle-ci peut atteindre des valeurs de l'ordre de 20 MJ. Cette dernière énergie est fournie aux bobines essentiellement durant la durée de montée du courant, un surplus étant encore fourni durant le palier de courant afin de compenser les pertes, les bobines réalimentant ensuite le dispositif de stockage durant la décroissance du courant.

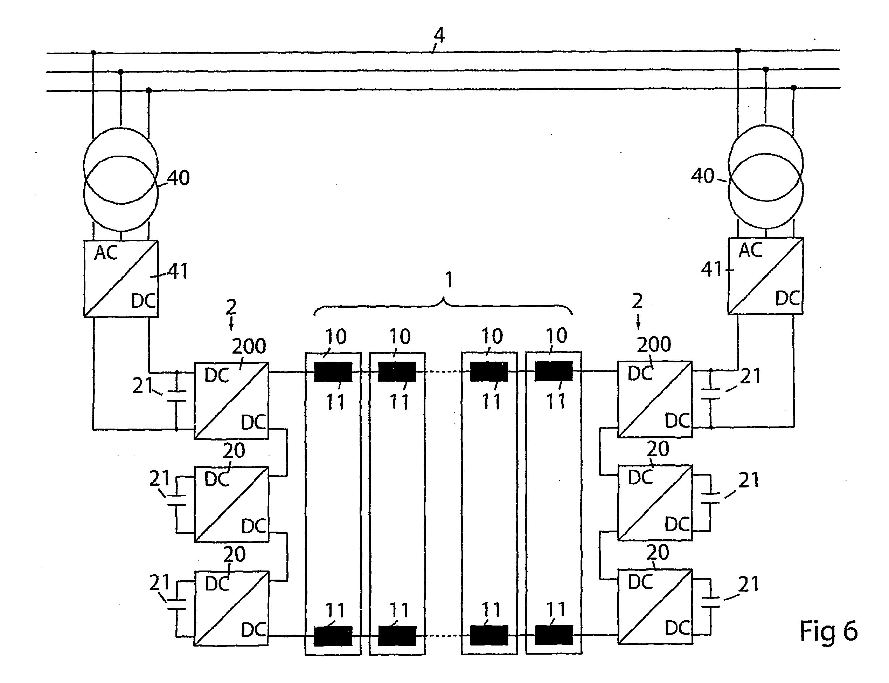

Sur la figure 6 montrant un dispositif d'alimentation selon l'invention appliqué à l'alimentation du synchrotron à protons du CERN, la charge 1 est constituée de 101 bobines 10 telles que décrites plus haut en regard de la figure 1. Seules 4 bobines sont représentés sur la figure, celles-ci étant schématisées uniquement par leurs inductances 11, les autre composants du schéma équivalent n'étant pas représentés afin de ne pas surcharger la figure. On voit sur la figure que la charge 1 est alimentée par ses deux extrémités opposées, ce qui permet de diviser par deux la tension d'alimentation, par deux jeux de convertisseurs DC/DC 2, chaque jeu comprenant ici trois cellules 20, 200 montées en série. Les cellules 200 sont directement reliées aux cellules de redresseurs 41 alors que les cellules 20 ne sont pas directement reliées auxdites cellules de redresseurs 41. Les convertisseurs 2 sont utilisés comme variateurs de tension, et comme éléments de stockage principaux d'énergie de par leurs condensateurs de circuit continu 21.

Considérant la charge 1 et les jeux de convertisseurs 2, et vu le comportement inductif de la charge 1 ainsi que le comportement capacitif des convertisseurs 2, on a échange d'énergie entre la charge 1 et les convertisseurs 2, l'énergie accumulée par la circulation du courant dans les bobines 10 étant récupérée par les condensateurs 21 des convertisseurs 2 lors de la diminution du courant dans les bobines 10 et est étant refournie auxdites bobines 10 durant la phase d'augmentation de courant, ces phases de variation de courant étant celles décrites plus haut en regard de la figure 2. Le stockage d'énergie dans les condensateurs 21 se fait selon la loi générale de fonctionnement des condensateurs $E = \frac{1}{2} CU^2$. L'alimentation constituée par les convertisseurs 2, respectivement les cellules 20, 200 des convertisseurs DC/DC connectés en série permet ainsi de fournir aux bobinages 10 une tension positive servant à augmenter le courant dans les bobines 10 et une tension négative lors de la diminution du courant.

Les cellules 20 et 200 des convertisseurs DC/DC 2 sont toutes semblables, une forme d'exécution préférentielle étant représentée à la figure 7. Chaque cellule 20, 200 est constituée d'un circuit hâcheur réversible comprenant deux branches 22 comprenant chacune deux éléments, soit une diode 23 et un élément semiconducteur enclenchable et déclenchable 24, par exemple un thyristor GTO (Gate Turn Off) ou IGCT (*Integrated Gate Controlled Thyristor*) comme représenté sur la figure ou un transistor IGBT (Insulated Gate Bipolar Transistor), montés en pont en H comme sur la figure. Pour des applications où le niveau de tension l'exige, on peut utiliser plusieurs éléments semi-conducteurs montés en série. Chaque cellule 20, 200 comprend un condensateur de stockage 21 placé du côté continu de la cellule. Le rapport de transformation de tension, soit le rapport entre la valeur moyenne de la tension de sortie entre les bornes 25 et 26 et la tension d'entrée entre les bornes 27 et 28, soit la tension aux bornes du condensateur 21, peut être commandé pour chaque cellule 20, 200 de convertisseur DC/DC par un circuit de modulation permettant d'enclencher et de déclencher les semi-conducteurs 24 selon des durées variables comme décrit plus bas.

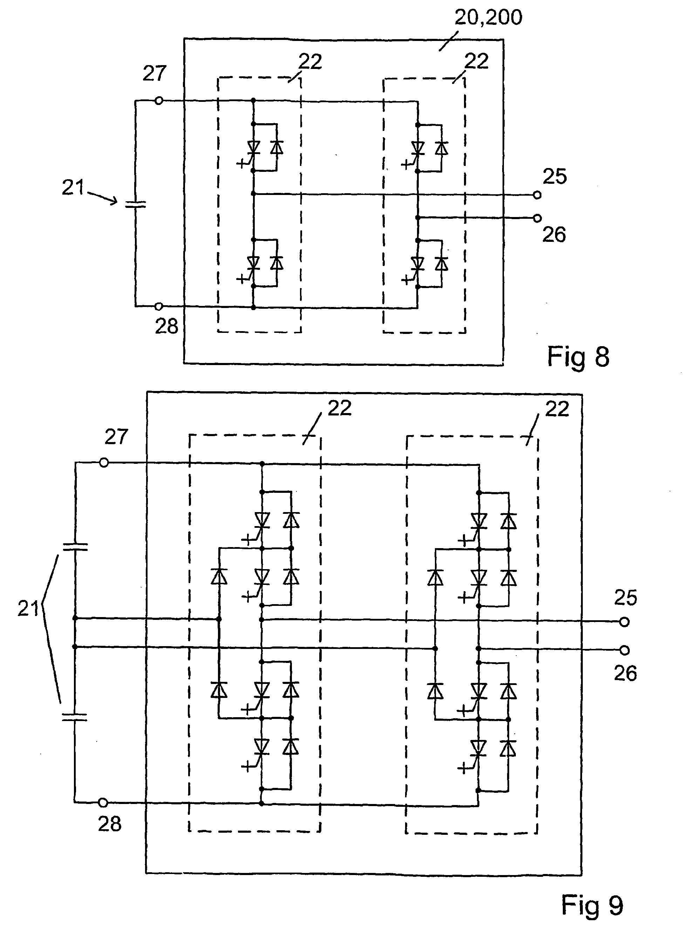

D'autres formes d'exécution de cellules 20, 200 de convertisseur DC/DC sont représentées aux figures 8 et 9. Dans ces formes d'exécution, on utilise des branches d'onduleurs de technique connue, selon des exécutions standardisées provenant d'applications industrielles. Les branches 22 sont alors constituées d'onduleurs dits « à deux niveaux », comme représenté sur la figure 8 ou « à trois niveaux », comme représenté sur la figure 9. Dans ce dernier cas, il est évident que le condensateur de stockage 21 associé à une telle cellule 20, 200 est remplacé par deux condensateurs en série. Des composants additionnels tels que circuits d'aide à la commutation, inductances, condensateurs, résistances ou autres peuvent être inclus dans de tels circuits ; ils n'ont pas été représentés sur les figures afin de ne pas les surcharger.

Pour une fourniture de courant élevée, les convertisseurs DC/DC 20, 200 peuvent comprendre plusieurs branches 20 montées en parallèle.

Le nombre de cellules 20, 200 de convertisseurs DC/DC dépend essentiellement de l'application considérée ; et plus particulièrement du niveau de tension qu'il est nécessaire d'atteindre en regard de la tension maximum que peut supporter un condensateur. Dans le cas présent de l'alimentation du synchrotron à proton du CERN, six cellules 20, 200 en série sont prévues, réparties en deux groupes de trois comme sur la figure 6. Ainsi, pour une tension totale maximum appliquée à la charge de 9 kV comme sur la figure 2, cette tension est divisée par six selon le nombre de cellules 20, 200, donnant donc une tension moyenne de l'ordre de 1.5 kV aux bornes de chaque cellule 20, 200, respectivement aux bornes de chaque condensateur 21.

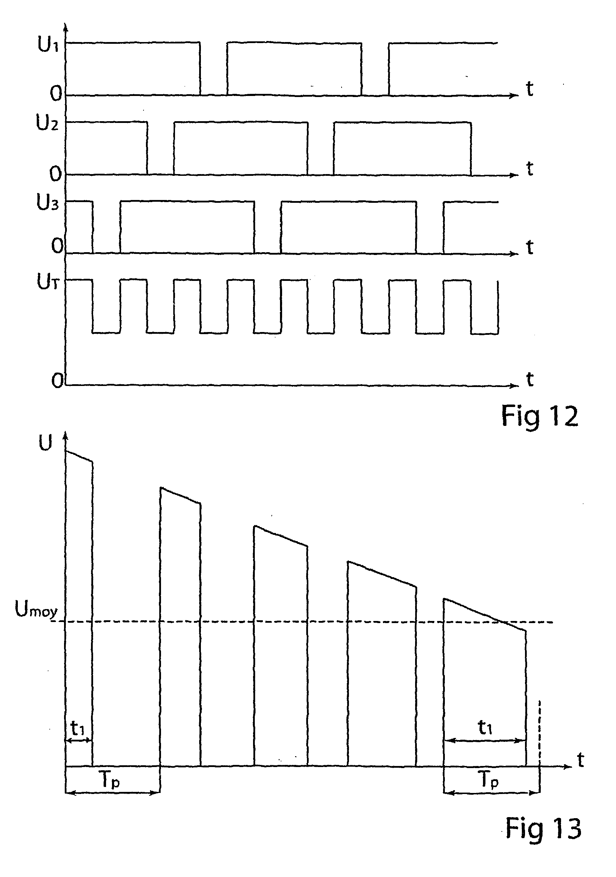

Il est à noter que pour pouvoir fournir une tension moyenne de 1.5 kV indépendamment de la fluctuation de la tension continue d'entrée d'une cellule 20, 200 de convertisseur DC/DC, cette valeur devra varier entre une valeur maximale supérieure à 1.5 kV et une valeur minimale égale théoriquement à 1.5 kV. Le principe de la correction de la tension de décharge des condensateurs par augmentation du rapport cyclique est expliqué plus bas, en regard de la figure 13.

Le fonctionnement des cellules 20 et 200 des convertisseurs DC/DC se fait selon le principe de la modulation en durée d'impulsions (PWM) avec une fréquence de pulsation (fréquence de hâchage) en général constante. Les signaux de commande d'enclenchement et de déclenchement des semi-conducteurs de puissance 24 sont générés par des modulateurs comme expliqué cidessous.

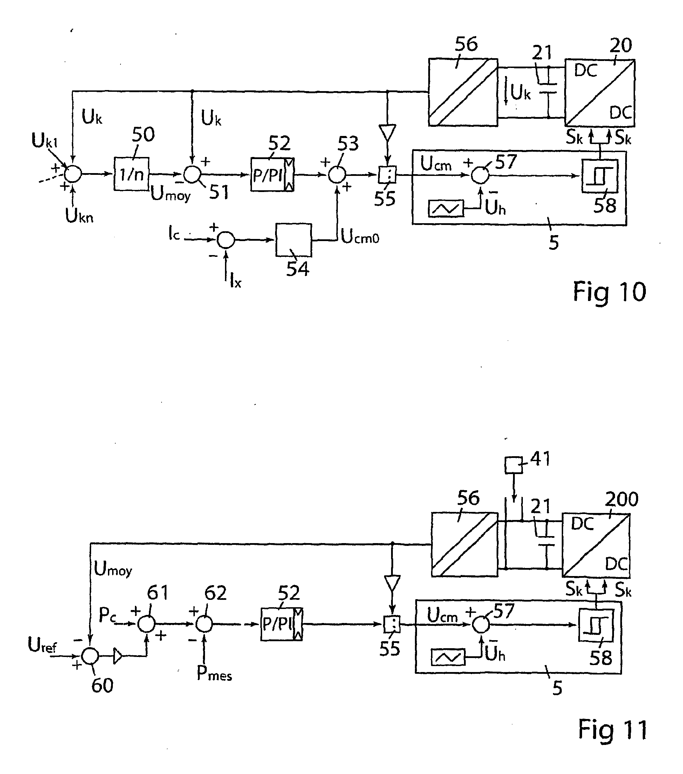

Une forme d'exécution d'un modulateur en durée d'impulsion (PWM) 5, couplé à une cellule 20 de convertisseur DC/DC non directement reliée à une cellule de redresseur 41 est représentée à la figure 10. Le réglage en courant décrit ci-dessous permet d'assurer que les tensions aux bornes de tous les condensateurs 21 soient équilibrées en tout temps et au même niveau.

Les tensions $U_{k1}$ à $U_{kn}$ mesurées aux bornes de tous les condensateurs 21 par l'instrument de mesure 56 sont tout d'abord additionnées puis une valeur moyenne $U_{moy}$ en est tirée dans l'élément 50. Cette valeur $U_{moy}$ est ensuite comparée, dans un comparateur 51 à la tension $U_k$ mesurée aux bornes du condensateur 21 correspondant à la cellule 20 commandée. Via un correcteur P/PI 52, une portion de rapport cyclique est additionnée ou soustraite, par un comparateur 53, à un rapport cyclique principal fourni par un régulateur d'état 54, calculant ledit rapport cyclique principal à partir de la valeur de courant à fournir à la charge et de valeurs d'état X mesurées sur la charge. Le comparateur 53 fournit ainsi une tension de consigne $U_{cm0}$. Celle-ci est introduite dans un diviseur 54 recevant par ailleurs une tension proportionnelle à la tension $U_k$ mesurée aux bornes du condensateur 21.

Le signal de sortie du diviseur vaut :

$$U_{cm} = U_{cm0} * k_2 / k_1 * U_d$$

ce signal $U_{cm}$ est ensuite comparé à un signal triangulaire $U_h$, à l'aide d'un soustracteur 54. Le signal résultant est introduit dans un discriminateur 55 délivrant un signal binaire $S_k$ envoyé comme signal de commande de chacun des semi-conducteurs enclenchables et déclenchables 24, respectivement sur les gâchettes des thyristors GTO ou les bases des transistors IGBT montés dans la cellule 20 de convertisseur DC/DC. On a donc, lorsque le condensateur 21 se décharge, la possibilité d'effectuer une correction de tension en effectuant une division de $U_{cm}$ par un signal proportionnel à $U_d$. Chacune desdites cellules 20 de convertisseur DC/DC est commandée par un modulateur 5 comme décrit ci-dessus.

Comme représenté à la figure 11, les cellules 200 des convertisseurs DC/DC directement reliées aux cellules de redresseurs 41 sont commandées par un réglage de puissance permettant d'assurer que lesdites cellules 200 fournissent la puissance voulue, apte à compenser les pertes dans le dispositif d'alimentation ainsi que dans la charge.

La valeur moyenne $U_{moy}$ des tensions des condensateurs 21 juste avant le cycle, mesurée par l'instrument de mesure 56 est comparée dans le comparateur 60 à une valeur de référence $U_{ref}$. Une proportion du signal résultant est ensuite ajoutée, à l'aide du sommateur 61, à une valeur $P_c$ représentant une consigne de puissance idéale calculée à partir d'un modèle du système qui permet de déterminer la puissance de perte à chaque instant en fonction de la valeur du courant circulant dans les aimants 10. Si les pertes sont exactement compensées, la valeur $U_{moy}$ juste avant le cycle est identique à la valeur de référence $U_{ref}$ et les condensateurs 21 sont pleinement chargés. Une correction, donnée par le comparateur 60, n'est introduite que si ces valeurs sont différentes, de manière à conserver les tensions des condensateurs 21 à leur tension de référence. Le signal de correction fourni par le comparateur 61 et comparé à la puissance mesurée $P_{mes}$ dans un comparateur 62, le signal résultant de ce dernier comparateur permettant de régler la tension aux bornes du condensateur 21 de la même manière que décrite plus haut et par des éléments comparables à ceux décrits en regard de la figure 10.

Vu le montage en série des cellules 20, chacune peut être commandée par des modulateurs générant des signaux de commande $S_k$ qui ne sont pas en phase mais qui sont décalés entre eux afin d'obtenir une tension de sortie fournie aux bobines 10 dont l'ondulation est réduite par rapport à un fonctionnement où toutes les cellules 20 seraient commandées par des signaux en phase. Un exemple des tensions de sorties est montré à la figure 12. On y voit les tensions $U_1$, $U_2$ et $U_3$ aux bornes 25, 26 des cellules 20 et dont la variation d'amplitude est de 100% pour chacune. La tension $U_T$ qui représente la somme des tensions des cellules, soit la tension aux bornes de la charge 1 n'a plus qu'une variation d'amplitude de 33 %. Simultanément sa fréquence de pulsation a fortement augmenté.

Chaque cellule 20, 200 de convertisseur DC/DC est reliée en série à sa voisine par ses bornes de sortie 25, 26.

Lors de la phase d'alimentation des bobines 10, soit durant la phase de montée du courant, l'énergie est transmise depuis les condensateurs 21, entraînant leur décharge. Il s'ensuit que la tension de sortie de chaque cellule 20, 200 de convertisseur DC/DC entre les bornes 25 et 26 dépend de la valeur de la tension du condensateur 21 qui lui est associé.

Afin de pouvoir alimenter la charge 1 avec une tension imposée, indépendamment de la fluctuation des tensions des condensateurs 21, un dispositif de commande est nécessaire pour corriger le taux de modulation de chaque cellule 20, 200 en fonction de la tension d'alimentation du condensateur 21.

La valeur moyenne $V_{moy}$ de la tension de sortie d'une cellule 20, 200 est donnée par :

$$V_{moy} = t_1 \,/\, T_p \,{}^* \cdot U_d$$

Avec :

$t_1$ = durée de l'impulsion
$T_p$ = période de répétition des impulsions
$U_d$ = tension aux bornes du condensateur

La figure 13 montre schématiquement le principe de la correction de décharge des condensateurs par augmentation du rapport cyclique du modulateur. Au début de la décharge, soit sur la partie gauche de la figure, le rapport cyclique est d'environ 50% ; alors que lorsque le condensateur 21 est déchargé, soit sur la partie droite de la figure, le même rapport cyclique vaut environ 90 %.

Lors de la phase de décharge des bobines 10, soit durant la phase de descente du courant, l'énergie est transmise aux condensateurs 21, entraînant leur recharge. Il s'ensuit que la tension de sortie de chaque cellule 20, 200 de convertisseur DC/DC entre les bornes 25 et 26 dépend de la valeur de la tension du condensateur 21 qui lui est associé. Cette variation de tension se répercute sur la tension totale fournie aux bobines 10 par la mise en série des cellules 20, 200 de convertisseur DC/DC.

Les cycles de charge et décharge des bobines 10 décrits ci-dessus entraînent des pertes dans les divers composants de circuits. Afin de compenser ces pertes, de l'énergie est prélevée du réseau électrique 4 (voir figure 6). Pour ceci, les convertisseurs DC/DC 2 sont reliés au réseau électrique 4 par l'intermédiaire de transformateurs 40 et de cellules de redresseurs 41, alimentant deux cellules 200 de convertisseurs DC/DC. Les transformateurs 40 servent uniquement à obtenir un niveau de tension acceptable à l'entrée des cellules de redresseurs 41 et à isoler galvaniquement la charge du réseau.

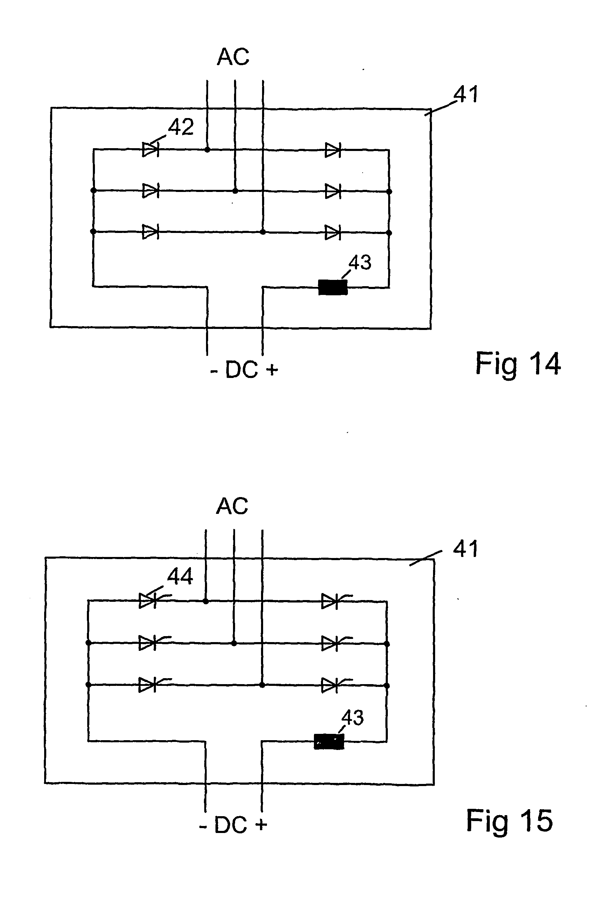

Selon une première forme d'exécution, les cellules de redresseurs 41 sont constituées par un pont de diodes 42 comme représenté à la figure 14. Dans cette forme d'exécution, l'absence de contrôle des redresseurs à diodes 42 ne permet pas de modifier la tension aux bornes des condensateurs 21 des cellules 200 des convertisseurs DC/DC. Un tel dispositif ne permet donc pas d'utiliser l'énergie accumulée dans les condensateurs 21 directement reliées auxdites cellules 200 des convertisseurs DC/DC reliées aux cellules de redresseurs 41. Une self de lissage 43 est prévue à la sortie positive du pont.

La variation de la tension de sortie des cellules de redresseurs 41 reste possible vu le principe de pulsation des cellules 200 des convertisseurs DC/DC décrit plus haut. Lors de l'augmentation du courant dans la charge, la contribution énergétique des condensateurs 21 des cellules 200 des convertisseurs DC/DC directement alimentés par les cellules de redresseurs 41, les deux cellules 200 du haut dans le schéma de la figure 6, est donc nulle et la puissance transmise ne peut donc être fournie que par les cellules de redresseurs 41, respectivement par le réseau. Dans ce cas, seuls les condensateurs 21 des cellules 20 des convertisseurs DC/DC non directement connectées à des cellules de redresseurs 41, les quatre cellules du bas dans le schéma de la figure 6, fonctionnent en éléments de stockage.

De manière préférentielle on choisira des cellules de redresseur 41 semblables à l'une des deux formes d'exécution suivantes, permettant ainsi que l'ensembles des condensateurs 21 des cellules 20 des convertisseurs DC/DC fonctionnent en éléments de stockage.

Selon une deuxième forme d'exécution, les cellules de redresseurs 41 sont constituées par un pont de thyristors 44 comme représenté à la figure 15. Avec cette forme d'exécution, il devient alors possible de faire varier la tension aux bornes des condensateurs 21. Pour la commande des ponts de thyristors on fera varier l'angle d'allumage $\alpha$ des thyristors 44 en fonction de la variation de la tension aux bornes des condensateurs 21. Cette variation de tension permet donc la décharge énergétique des condensateurs 21. La puissance instantanée fournie par les cellules de redresseurs 41 à thyristors n'est donc ainsi pas égale à la puissance instantanée transmise à la charge. Comme pour la forme d'exécution précédente, une self de lissage 43 est prévue à la sortie positive de la cellule 41.

L'utilisation de thyristors dans les cellules de redresseurs 41, avec une commande de l'angle d'allumage $\alpha$ desdits thyristors 44, implique une variation de l'angle de déphasage entre la tension et le courant alternatif à l'entrée des cellules de redresseurs 41, entraînant ainsi une consommation de puissance réactive au réseau primaire. Ces phénomènes sont décrits et expliqués dans : « H. Bühler - Electronique de puissance -Traité d'Electricité - vol XV - PPUR , Presses Polytechniques et Universitaires Romandes - Chap. 9, para 9.2.4 et 9.4.1 »

Afin de limiter la puissance réactive prélevée, on peut utiliser une commande à séquence telle que décrite au chap 9.5 du manuel mentionné ci-dessus.

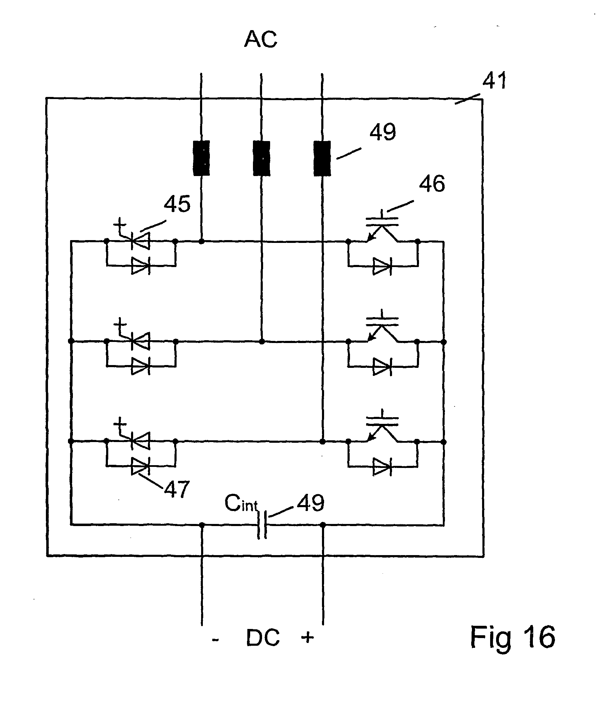

Selon une troisième forme d'exécution, les cellules de redresseurs 41 sont constituées de redresseurs à pulsations comme représenté à la figure 16. Dans ce cas, la cellule de redresseurs 41 comprend un montage en pont constitué de thyristors 45 de type GTO ou IGCT, comme représenté sur la portion de gauche de la figure, ou de transistors 46, de type IGBT, comme représenté sur la portion de droite de la figure, étant entendu que le pont est uniquement constitué d'éléments semi-conducteurs de l'un ou de l'autre type. Chacun desdits éléments semi-conducteurs ci-dessus 45 ou 46 comprend une diode 47 montée en anti-parallèle. Dans le cas d'utilisation d'une cellule de redresseur 41 à pulsation, les liaisons avec le réseau électrique primaire alternatif doivent se faire par l'intermédiaire d'inductances de découplage et de lissage 48 comme représenté sur la figure.

Avec un tel montage, on trouve un premier avantage dans la forme du courant alternatif primaire dont la forme est très proche d'une forme sinusoïdale et dont les harmoniques sont liées à la fréquence de pulsation. Contrairement à la forme des courants alternatifs des redresseurs à diodes ou thyristors décrits plus haut, les courant alternatifs des redresseurs 41 à pulsations sont exempts d'harmoniques à basses fréquences ($\gamma$ = 5, 7,11,...).

Un autre avantage d'un tel montage réside dans le fait qu'il est possible d'imposer librement le déphasage d'onde fondamentale du courant, permettant ainsi d'imposer un cos $\varphi$, voire de fonctionner avec un cos $\varphi$ unitaire ou même d'utiliser ces cellules de redresseurs comme compensateurs de puissance réactive si nécessaire.

Une cellule de redresseurs 41 à pulsations telle que décrite ici impose une limite inférieure de tension de sortie fournie aux condensateurs 21, cette tension ne devant pas devenir inférieure à la valeur de crête de la tension alternative d'entrée de la cellule 41. Dans le cas où cette tension continue deviendrait inférieure à cette valeur de crête seules les diodes 47 resteraient actives, même dans le cas où les thyristors 45 ou les transistors 46 ne seraient pas activés. La cellule de redresseurs 41 fonctionnerait alors comme un redresseur à diodes, non contrôlable.

Au dessus de cette valeur limite inférieure, il est possible de faire varier la tension aux bornes des condensateurs 21, permettant ainsi d'exploiter leur capacité de stockage d'énergie, respectivement leur capacité d'emmagasiner et de restituer de l'énergie.

Pour un fonctionnement correct du redresseur à pulsations, il est nécessaire que la sortie du côté DC présente une capacité minimum $C_{int}$, repérée par 49 sur la figure. Pour le cas où les condensateurs 21 sont relativement proches des cellules des redresseurs à pulsations 41, ils peuvent faire office de capacité de sortie desdites cellules.

Il est évident que la description ci-dessus d'un dispositif d'alimentation est donnée à titre d'exemple d'une forme d'exécution possible d'un dispositif d'alimentation apte à délivrer une puissance moyenne de relativement faible valeur accompagnée de pointes de puissances fournies par des moyens de stockage intégrés audit dispositif d'alimentation. En particulier des dispositions de circuits, de composants, des éléments semi-conducteurs ou des nombres de cellules peuvent être différents que décrit ci-dessus, selon le type de charge rencontrée ou d'impulsion de courant à fournir, sans néanmoins s'éloigner du cadre des revendications.

**Revendications**

1. Dispositif d'alimentation d'une charge (1) nécessitant d'une part la fourniture d'une puissance électrique déterminée et d'autre part la fourniture d'une forte énergie durant une faible durée du cycle de fonctionnement, le cycle de fonctionnement étant répété, ledit dispositif d'alimentation comprenant un raccordement à un réseau électrique (4), des moyens de transformation de tension alternative (40), des moyens de redressement de tension (41), une pluralité de convertisseurs DC/DC (2), un condensateur de stockage (21) étant monté en parallèle sur chacun desdits convertisseurs DC/DC (20, 200), **caractérisé en ce que** lesdits convertisseurs DC/DC (2) sont montés en série aux bornes de la charge, alors qu'au moins un desdits convertisseurs DC/DC (200) est alimenté directement par le moyen de redressement de tension, tandis qu' au moins un autre desdits convertisseurs DC/DC (20) est alimenté indirectement à travers un autre convertisseur DC/DC (200) par le moyen de redressement de tension.

2. Dispositif d'alimentation selon la revendication 1, **caractérisé en ce que** les moyens de redressement sont constitués d'au moins une cellule de redresseur (41) comprenant six diodes (42) montées en pont et une inductance de lissage (43) montée en série sur la sortie DC positive.

3. Dispositif d'alimentation selon la revendication 1, **caractérisé en ce que** les moyens de redressement sont constitués d'au moins une cellule de redresseur (41) comprenant six thyristors (44) montés en pont et une inductance de lissage (43) montée en série sur la sortie DC positive.

4. Dispositif d'alimentation selon la revendication 1, **caractérisé en ce que** les moyens de redressement sont constitués d'au moins une cellule de redresseur à pulsation (41) comprenant six éléments semiconducteurs commandables, des thyristors de type GTO ou IGCT (45) ou des transistors de type IGBT (46), chacun desdits éléments semi-conducteurs commandables comprenant une diode (47) montée en anti-parallèle, une inductance de découplage (49) étant montée sur chacune des entrées alternatives.

5. Dispositif d'alimentation selon l'une des revendications précédentes, **caractérisé en ce que** les convertisseurs DC/DC (20, 200) comprennent chacun un circuit hâcheur réversible comprenant deux branches (22), chaque branche comportant une diode (23) ou plusieurs diodes montées en série et un élément semi-conducteur enclenchable et déclenchable (24) ou plusieurs éléments semi-conducteur enclenchables et déclenchables montés en série, montés en opposition relativement auxdites diodes, le condensateur de stockage (21) étant monté aux bornes desdites branches.

**6.** Dispositif d'alimentation selon l'une des revendications précédentes, **caractérisé en ce que** les convertisseurs DC/DC (20, 200) comprennent chacun un circuit hâcheur réversible comprenant deux branches (22), chaque branche comprenant une ou plusieurs branches d'onduleurs à deux ou trois niveaux.

**7.** Dispositif d'alimentation selon l'une des revendications précédentes, **caractérisé en ce que** chaque convertisseur DC/DC (200) directement alimenté par lesdits moyens de redressement (41) est commandé par un modulateur (5) assurant un réglage de puissance afin d'assurer que lesdits convertisseurs DC/DC fournissent la puissance voulue apte à compenser les pertes provoquées dans le dispositif d'alimentation ainsi que dans la charge.

**8.** Dispositif d'alimentation selon la revendication 7, **caractérisé en ce que** ledit modulateur (5) fournit un signal de commande ($S_k$) aux éléments semi-conducteurs enclenchables et déclenchables (24) dudit convertisseur DC/DC (200), ledit signal étant fourni par un discriminateur (58) alimenté notamment par un signal en provenance de signaux de mesures de la tension moyenne ($U_{moy}$) mesurée juste avant un cycle de fourniture d'énergie dans chacun des condensateurs de stockage (21).

**9.** Dispositif d'alimentation selon l'une des revendications précédentes, **caractérisé en ce que** chaque convertisseur DC/DC (20) non directement alimenté par lesdits moyens de redressement (41) est commandé par un modulateur (5) assurant un réglage de courant afin d'assurer que les tensions aux bornes des condensateurs de stockage (21) soient en tout temps équilibrées et de même niveau.

**10.** Dispositif d'alimentation selon la revendication 9, **caractérisé en ce que** ledit modulateur (5) fournit un signal de commande ($S_k$) aux éléments semi-conducteurs enclenchables et déclenchables (24) dudit convertisseur DC/DC (20), ledit signal étant fourni par un discriminateur (58) alimenté notamment par un signal en provenance de signaux de mesures de la tension aux bornes de tous les condensateurs de stockage (21).

**11.** Dispositif d'alimentation selon l'une des revendications 7 à 10, **caractérisé en ce que** les signaux ($S_k$) de commande des convertisseurs DC/DC (200, 20) sont décalés entre eux, de manière à décaler les tensions générées par les convertisseurs DC/DC (200, 20) entre elles, de manière à fournir à la charge (1) une tension ayant une ondulation réduite.

**Claims**

**1.** A device for supplying power to a load (1) requiring both a pre-determined supply of electrical power and a supply of a high energy for a short duration of the operating cycle, where the operating cycle is repeated, the power supply device having a connection to an electrical grid (4), an AC voltage transformation circuit (40), voltage rectification means (41), a plurality of DC/DC converters (2), a storage capacitor (21) mounted in parallel to each of the DC/DC converters (20, 200) **characterised in that** the DC/DC converters (2) are mounted in series to the terminals of the load (1), wherein at least one of the DC/DC converters (200) is supplied directly by the voltage rectification means, whereas at least another one of the DC/DC converters (20) is supplied indirectly via another DC/DC converter (200) by the voltage rectification means.

**2.** The power supply device according to Claim 1, **characterised in that** the rectification means are formed from at least one rectifier cell (41) comprising six diodes (42) mounted in a bridge assembly and one smoothing inductance (43) mounted in series at the positive DC output.

**3.** The power supply device according to Claim 1, **characterised in that** the rectification means are formed from at least one rectifier cell (41) comprising six thyristors (44) mounted in a bridge assembly and one smoothing inductance (43) mounted in series at the positive DC output.

**4.** The power supply device according to Claim 1, **characterised in that** the rectification means are formed from at least one pulse rectifier cell (41) comprising six controllable semiconductor components, GTO or IGCT-type thyristors (45) or IGBT-type transistors (46), each of these controllable semiconductor components comprising a diode (47) in anti-parallel connection, with a decoupling inductance (49) mounted at each of the AC inputs.

**5.** The power supply device according to any of the preceding claims, **characterised in that** the DC/DC converters (20, 200) each comprise a reversible chopper circuit comprising two branches (22) with each branch comprising a diode (23) or several diodes mounted in series and one switchable semiconductor element (24) or several switchable semiconductor elements mounted in series, and mounted in opposite to the aforementioned diodes, with the storage capacitor (21) mounted on the terminals of the branches.

**6.** The power supply device according to any of the preceding claims, **characterised in that** the DC/DC converters (20, 200) each comprise a reversible chopper circuit comprising two branches (22), each branch comprising one or more branches of two-level or three-level inverters.

7. The power supply device according to any of the preceding claims, **characterised in that** each DC/DC converter (200) directly supplied by said rectification means (41) is controlled by a modulator (5) ensuring a power adjustment ensuring that the DC/DC converters supply the power required to compensate the losses in the power supply device and in the load.

8. The power supply device according to Claim 7, **characterised in that** said modulator (5) supplies a control signal ($S_k$) to the switchable semiconductor elements (24) of the DC/DC converter (200), the signal being supplied by a discriminator (58) whose input is preferably a signal coming from mean voltage ($U_{moy}$) measurement signals, measured immediately prior to an energy delivery cycle in each of the storage capacitors (21).

9. The power supply device according to any of the preceding claims, **characterised in that** each DC/DC converter (20) not directly supplied by the rectification means (41) is controlled by a modulator (5) ensuring a current adjustment to ensure that the voltages at the terminals of the storage capacitors (21) are continually and uniformly balanced.

10. The power supply device according to Claim 9, **characterised in that** the modulator (5) supplies a control signal ($S_k$) to the switchable semiconductor elements (24) of the DC/DC converter (20), the signal being supplied by a discriminator (58) whose input is preferably a signal obtained from voltage measurement signals at the terminals of all the storage capacitors (21).

11. The power supply device according to any of Claims 7 to 10, **characterised in that** the control signals ($S_k$) of the DC/DC converters (200, 20) are staggered with respect to one another in order to stagger the voltages generated by the DC/DC converters (200, 20) so that a voltage supplied to the load (1) has a reduced ripple.

**Patentansprüche**

1. Vorrichtung zur Leistungsversorgung einer Last (1), welche sowohl eine vorbestimmte elektrische Leistung als auch eine große Energiemenge über die Dauer eines kurzen Betriebszyklus benötigt, wobei der Betriebszyklus wiederholt wird und die Leistungsversorgungsvorrichtung einen Anschluss an ein elektrisches Netzwerk (4), einen Wechselspannungstransformatorschaltkreis (40), Gleichrichtermittel (41), mehrere Gleichspannungswandler (2) und einen Speicherkondensator (21), welcher jedem der Gleichspannungswandler (20, 200) parallel geschaltet ist, umfasst,
**dadurch gekennzeichnet, dass** die Gleichspannungswandler (2) mit den Anschlüssen der Last (1) in Reihe geschaltet sind, wobei wenigstens einer der Gleichspannungswandler (200) direkt an die Gleichrichtermittel angeschlossen ist, wohingegen wenigstens ein weiterer Gleichspannungswandler (20) indirekt über einen anderen Gleichspannungswandler (200) an die Gleichrichtermittel angeschlossen ist.

2. Leistungsversorgungsvorrichtung nach Anspruch 1, **dadurch gekennzeichnet, dass** die Gleichrichtermittel durch wenigstens eine Gleichrichterzelle (41) gebildet sind, welche sechs in einer Brückenschaltungskonfiguration geschaltete Dioden (42) und eine am positiven Gleichspannungsausgang in Reihe geschaltete Glättungsinduktivität umfasst.

3. Leistungsversorgungsvornchtung nach Anspruch 1, **dadurch gekennzeichnet, dass** die Gleichrichtermittel durch wenigstens eine Gleichrichterzelle (41) gebildet sind, welche sechs in einer Brückenschaltungskonfiguration geschaltete Thyristoren (44) und eine am positiven Gleichspannungsausgang in Reihe geschaltete Glättungsinduktivität umfasst.

4. Leistungsversorgungsvorrichtung nach Anspruch 1, **dadurch gekennzeichnet, dass** die Gleichrichtermittel durch wenigstens einerPulsgleichrichterzelle (41) gebildet sind, welche sechs steuerbare Halbleiterbauelemente, Thyristoren (45) vom GTO- oder IGCT-Typ oder Transistoren (46) vom IGBT-Typ umfasst, wobei jedes der steuerbaren Halbleiterbauelemente eine antiparallel geschaltete Diode (47) umfasst und wobei eine Entkopplungsinduktivität (49) in jeden der Wechselspannungseingänge geschaltet ist.

5. Leistungsversorgungsvorrichtung nach einem der vorangehenden Ansprüche, **dadurch gekennzeichnet, dass** jeder der Gleichspannungswandler (20, 200) einen reversiblen Zerhackerschaltkreis mit zwei Zweigen (22) umfasst, wobei jeder der Zweige eine Diode (23) oder mehrere in Reihe geschaltete Dioden sowie ein schaltbares Halbleiterelement (24) oder mehrere in Reihe geschaltete schaltbare Halbleiterelemente, welche den Dioden entgegengerichtet sind, umfasst und wobei der Speicherkondensator (21) an die Ausgänge der Zweige angeschlossen ist.

6. Leistungsversorgungsvorrichtung nach einem der vorangehenden Ansprüche, **dadurch gekenn-**

**zeichnet, dass** jeder der Gleichspannungswandler (20, 200) einen reversiblen Zerhackerschaltkreis mit zwei Zweigen (22) umfasst, wobei jeder der Zweige wenigstens einen Zweig mit Zweiniveau- oder Dreiniveau-Wechselrichtem umfasst.

7. Leistungsversorgungsvorrichtung nach einem der vorangehenden Ansprüche, **dadurch gekennzeichnet, dass** jeder direkt an die Gleichrichtermittel (41) angeschlossene Gleichspannungswandler (200) von einem Modulator (5) gesteuert ist, welcher eine Leistungsanpassung gewährleistet, um sicherzustellen, dass die Gleichspannungswandler die zum Ausgleich der Verluste in der Leistungsversorgungsvorrichtung und in der Last nötige Leistung bereitstellen.

8. Leistungsversorgungsvorrichtung nach Anspruch 7, **dadurch gekennzeichnet, dass** der Modulator (5) ein Steuersignal ($S_k$) an die schaltbaren Halbleiterelemente (24) der Gleichspannungswandler (200) bereitstellt, wobei das Signal von einem Diskriminator (58) bereitgestellt wird, dessen Eingangssignal vorzugsweise von Messsignalen einer mittleren Spannung ($U_{moy}$) herrührt, welche unmittelbar vor einem Energieversorgungszyklus in jedem der Speicherkondensatoren (21) gemessen wird.

9. Leistungsversorgungsvorrichtung nach einem der vorangehenden Ansprüche, **dadurch gekennzeichnet, dass** jeder nicht direkt an die Gleichrichtermittel (41) angeschlossene Gleichspannungswandler (20) von einem Modulator (5) gesteuert ist, welcher eine Stromanpassung gewährleistet, um sicherzustellen, dass die Spannungen an den Anschlüssen der Speicherkondensatoren (21) jederzeit und gleichmäßig ausgeglichen sind.

10. Leistungsversorgungsvorrichtung nach Anspruch 9, **dadurch gekennzeichnet, dass** der Modulator (5) ein Steuersignal ($S_k$) an die schaltbaren Halbleiterelemente (24) der Gleichspannungswandler (20) bereitstellt, wobei das Signal von einem Diskriminator (58) bereitgestellt wird, dessen Eingangssignal vorzugsweise aus Messsignalen einer Spannung an den Anschlüssen aller Speicherkondensatoren (21) gewonnen ist.

11. Leistungsversorgungsvorrichtung nach einem der Ansprüche 7 bis 10, **dadurch gekennzeichnet, dass** die Steuersignale ($S_k$) der Gleichspannungswandler (200, 20) untereinander gestaffelt sind, so dass sie die von den Gleichspannungswandlern (200, 20) bereitgestellten Spannungen staffeln, um an die Last (1) eine Spannung mit verminderter Welligkeit bereitzustellen.

Fig 1

Fig 7

Fig 2

Fig 3

Fig 4

Fig 5

Fig 6

Fig 8

Fig 9

Fig 10

Fig 11

Fig 12

Fig 13

AC

42

41

- DC +

Fig 14

AC

44

41

43

- DC +

Fig 15

AC

41

49

46

45

46

47

C$_{int}$ 49

- DC +

Fig 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5638263 A

**Littérature non-brevet citée dans la description**

- **A. Rufer.** A Supercapacitor-Based Energy-Storage System for Elevators With Soft Commutated Interface. *IEEE Transactions on Industry Applications,* Septembre 2002, vol. 38 (5